(19) **Europäisches Patentamt / European Patent Office / Office européen des brevets**

(11) **EP 4 359 784 B1**

(12) **FASCICULE DE BREVET EUROPEEN**

(45) Date de publication et mention de la délivrance du brevet:
**02.07.2025 Bulletin 2025/27**

(21) Numéro de dépôt: **22732210.4**

(22) Date de dépôt: **09.06.2022**

(51) Classification Internationale des Brevets (IPC):
**G01N 29/06** (2006.01)    **G01N 29/04** (2006.01)
**G01N 29/26** (2006.01)    **B06B 1/02** (2006.01)
**B06B 1/06** (2006.01)    **G01S 15/89** (2006.01)

(52) Classification Coopérative des Brevets (CPC):
**G01N 29/0654; B06B 1/0223; G01N 29/043; G01N 29/262; G01S 15/8925; B06B 1/0292; B06B 1/0629; G01N 2291/106**

(86) Numéro de dépôt international:
**PCT/EP2022/065642**

(87) Numéro de publication internationale:
**WO 2022/268512 (29.12.2022 Gazette 2022/52)**

(54) **PROCEDE ET DISPOSITIF D'IMAGERIE ULTRASONORE A ADRESSAGE LIGNE-COLONNE**

VERFAHREN UND VORRICHTUNG FÜR ULTRASCHALLBILDGEBUNG MITTELS ZEILE-SPALTE ADDRESSIEREN

METHOD AND DEVICE FOR ULTRASOUND IMAGING USING ROW-COLUMN ADDRESSING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.06.2021 FR 2106871**

(43) Date de publication de la demande:
**01.05.2024 Bulletin 2024/18**

(73) Titulaire: **Moduleus**
**37100 Tours (FR)**

(72) Inventeurs:
• **BOULME, Audren**
**37100 TOURS (FR)**
• **CHATAIN, Pascal**
**37100 TOURS (FR)**
• **BREBION, Stéphane**
**37100 TOURS (FR)**

(74) Mandataire: **Cabinet Beaumont**
**4, Place Robert Schuman**
**B.P. 1529**
**38025 Grenoble Cedex 1 (FR)**

(56) Documents cités:
**US-A1- 2019 235 077**

• **CEROICI CHRIS ET AL: "Fast Orthogonal Row-Column Electronic Scanning With Top-Orthogonal-to-Bottom Electrode Arrays", IEEE TRANSACTIONS ON ULTRASONICS, FERROELECTRICS, AND FREQUENCY CONTROL, IEEE, USA, vol. 64, no. 6, 1 June 2017 (2017-06-01), pages 1009 - 1014, XP011650924, ISSN: 0885-3010, [retrieved on 20170526], DOI: 10.1109/TUFFC.2017.2686781**
• **CEROICI CHRIS ET AL: "Fast Orthogonal Row-Column Electronic Scanning Experiments and Comparisons", IEEE TRANSACTIONS ON ULTRASONICS, FERROELECTRICS, AND FREQUENCY CONTROL, IEEE, USA, vol. 66, no. 6, 1 June 2019 (2019-06-01), pages 1093 - 1101, XP011728147, ISSN: 0885-3010, [retrieved on 20190605], DOI: 10.1109/TUFFC.2019.2906599**

EP 4 359 784 B1

**EP 4 359 784 B1**

**Description**

La présente demande est basée sur, et revendique la priorité de, la demande de brevet français FR2106871 déposée le 25 juin 2021 et ayant pour titre « Procédé et dispositif d'imagerie ultrasonore à adressage ligne-colonne ».

Domaine technique

La présente description concerne le domaine de l'imagerie ultrasonore, et vise plus particulièrement un dispositif comportant une matrice de transducteurs ultrasonores à adressage ligne-colonne, et un procédé d'acquisition d'une image d'un corps au moyen d'un tel dispositif.

Technique antérieure

Un dispositif d'imagerie ultrasonore comprend classiquement une pluralité de transducteurs ultrasonores, et un circuit électronique de commande connecté aux transducteurs. En fonctionnement, l'ensemble des transducteurs est disposé face à un corps dont on souhaite acquérir une image. Le circuit électronique de commande est configuré pour appliquer des signaux électriques d'excitation aux transducteurs, de façon à provoquer l'émission d'ondes ultrasonores par les transducteurs, en direction du corps ou objet à analyser. Les ondes ultrasonores émises par les transducteurs sont réfléchies par le corps à analyser (par sa structure interne et/ou superficielle), puis reviennent vers les transducteurs qui les convertissent à nouveau en signaux électriques. Ces signaux électriques de réponse sont lus par le circuit électronique de commande, et peuvent être mémorisés et analysés pour en déduire des informations sur le corps étudié.

Les transducteurs ultrasonores peuvent être disposés en barrette dans le cas d'un dispositif d'acquisition d'images bidimensionnelles, ou en matrice dans le cas d'un dispositif d'acquisition d'images tridimensionnelles. Dans le cas d'un dispositif d'acquisition d'images bidimensionnelles, l'image acquise est représentative d'une coupe du corps étudié dans un plan défini par l'axe d'alignement des transducteurs de la barrette d'une part, et par la direction d'émission des transducteurs d'autre part. Dans le cas d'un dispositif d'acquisition d'images tridimensionnelles, l'image acquise est représentative d'un volume défini par les deux directions d'alignement des transducteurs de la matrice et par la direction d'émission des transducteurs.

Parmi les dispositifs d'acquisition d'images tridimensionnelles, on peut distinguer les dispositifs dits entièrement peuplés ("fully populated" en langue anglaise), dans lesquels chaque transducteur de la matrice est adressable individuellement, et les dispositifs dits à adressage ligne-colonne ou RCA (de l'anglais "Row-Column Addressing"), dans lesquels les transducteurs de la matrice sont adressables par ligne et par colonne.

Les dispositifs entièrement peuplés offrent une plus grande flexibilité dans la mise en forme des faisceaux ultrasonores en émission et en réception. L'électronique de commande de la matrice est toutefois complexe, le nombre de canaux d'émission/réception requis étant égal à M*N dans le cas d'une matrice de M lignes par N colonnes. De plus, le rapport signal sur bruit est généralement relativement faible dans la mesure où chaque transducteur présente une faible surface d'exposition aux ondes ultrasonores.

Les dispositifs de type RCA utilisent des algorithmes de mise en forme des faisceaux ultrasonores différents. Les possibilités de mise en forme des faisceaux peuvent être réduites par rapport aux dispositifs entièrement peuplés. Toutefois, l'électronique de commande de la matrice est considérablement simplifiée, le nombre de canaux d'émission/réception requis étant réduit à M+N dans le cas d'une matrice de M lignes par N colonnes. De plus, le rapport signal sur bruit est amélioré du fait de l'interconnexion des transducteurs en ligne ou en colonne lors des phases d'émission et de réception.

On s'intéresse ici plus particulièrement aux dispositifs et procédés d'acquisition d'images tridimensionnelles à adressage ligne-colonne (RCA).

Il serait souhaitable d'améliorer au moins en partie certains aspects des dispositifs et procédés d'acquisition d'images ultrasonores tridimensionnelles à adressage ligne-colonne. L'article de C. Ceroici et al. intitulé "Fast Orthogonal Row-Column Electronic Scanning With Top-Orthogonal-to-Bottom Electrode Arrays" (IEEE Transactions On Ultrasonics Ferroelectrics and Frequency Control, vol. 64 no. 6, 1 juin 2017, pages 1009-1014, XP011650924), l'article de C. Ceroici et al. intitulé "Fast Orthogonal Row-Column Electronic Scanning With Top-Orthogonal-to-Bottom Electrode Arrays" (IEEE Transactions On Ultrasonics Ferroelectrics and Frequency Control, vol. 66 no. 6, 1 juin 2019, pages 1093-1101, XP011728147), et le document US2019/235077 décrivent des exemples de procédés et dispositifs d'imagerie ultrasonore.

Résumé de l'invention

L'invention est définie par la revendication 1 annexée. Un mode de réalisation prévoit un procédé d'acquisition d'une image d'un corps au moyen d'un dispositif d'imagerie ultrasonore matriciel à adressage ligne-colonne, le dispositif comprenant une matrice de transducteurs ultrasonores élémentaires connectés en lignes et en colonnes par respectivement des électrodes de ligne et des électrodes de colonne, le procédé comprenant :

- réaliser N tirs successifs d'une même onde ultrasonore en direction dudit corps, où N est un entier supérieur ou égal à 2 ; et
- après chaque tir, mettre en oeuvre une phase de réception, au moyen dudit dispositif, d'une onde ultrasonore retour, réfléchie par ledit corps,

    dans lequel, lors de chacune des phases de réception, une grandeur électrique variable représentative de l'onde reçue est lue sur chaque électrode de ligne du dispositif,
    et dans lequel, entre deux phases de réception quelconques parmi les N phases de réception, on modifie le signe de la contribution individuelle d'au moins un transducteur ultrasonore élémentaire de la matrice.

Selon un mode de réalisation, lors de chacune des N phases de réception, chaque électrode de colonne de la matrice est maintenue à une tension de polarisation continue, et, entre deux phases de réception quelconques parmi les N phases de réception, on modifie le signe de la tension de polarisation continue appliquée sur au moins l'une des électrodes de colonne du dispositif.

Selon un mode de réalisation, les signes des tensions de polarisation appliquées respectivement sur les électrodes de colonne du dispositif lors des N phases de réception sont codés par les vecteurs d'une matrice orthogonale, par exemple une matrice de Hadamard.

Selon un mode de réalisation, les N tirs successifs sont réalisés au moyen dudit dispositif d'imagerie ultrasonore matriciel à adressage ligne-colonne, et, lors de chacun des N tirs, chaque électrode de colonne de la matrice est maintenue à une tension de polarisation continue, et une tension d'excitation alternative superposée à la tension de polarisation continue est appliquée sur ladite électrode de colonne, et, lors de chaque tir, les signes des tensions de polarisation continues appliquées respectivement sur les électrodes de colonne de la matrice sont les mêmes que les signes des tensions de polarisation continues appliquées respectivement sur les électrodes de colonne lors de la phase de réception subséquente.

Selon un mode de réalisation, entre deux phases de réception quelconques parmi les N phases de réception, on inverse, au moyen d'un système de commutateurs, la connexion électrique d'au moins un transducteur élémentaire entre les électrodes de ligne et de colonne, de façon à modifier le signe de la contribution individuelle dudit au moins un transducteur ultrasonore élémentaire de la matrice.

Selon un mode de réalisation, les transducteurs ultrasonores sont des transducteurs CMUT ou PMUT.

Selon un mode de réalisation, la matrice comprend N lignes et N colonnes de transducteurs ultrasonores élémentaires.

Selon l'invention, le procédé comprend une étape de calcul, au moyen d'un dispositif électronique de traitement, par des combinaisons linéaires des grandeurs électriques variables lues sur les électrodes de ligne du dispositif lors des N phases de réception, d'une contribution individuelle de chacun des transducteurs élémentaires de la matrice.

Selon un mode de réalisation, la grandeur électrique variable lue sur chaque électrode de ligne du dispositif est une tension.

Un autre mode de réalisation prévoit un dispositif d'imagerie ultrasonore matriciel à adressage ligne-colonne, le dispositif comprenant une matrice de transducteurs ultrasonores élémentaires connectés en lignes et en colonnes par respectivement des électrodes de ligne et des électrodes de colonne, et un circuit de commande configuré pour mettre en oeuvre un procédé tel que défini ci-dessus.

Selon un mode de réalisation, les transducteurs ultrasonores sont des transducteurs CMUT ou PMUT.

Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :

    la figure 1 est une vue de dessus illustrant de façon schématique et partielle un exemple d'un dispositif d'imagerie ultrasonore matriciel à adressage ligne-colonne ;

    la figure 2 comprend une vue en coupe selon un plan A-A de la figure 1, et une vue en coupe selon un plan B-B de la figure 1, illustrant plus en détail un exemple de réalisation du dispositif de la figure 1 ;

    la figure 3 est un schéma électrique équivalent d'un dispositif d'imagerie ultrasonore matriciel à adressage ligne-colonne de dimensions 2x2 fonctionnant en réception ;

la figure 4 est un schéma électrique équivalent d'un dispositif d'imagerie ultrasonore matriciel à adressage ligne-colonne de dimensions NxN fonctionnant en réception ;

la figure 5 illustre schématiquement, sous forme de diagrammes, le comportement d'un exemple d'un transducteur ultrasonore en émission ;

la figure 6 illustre schématiquement, sous forme de diagrammes, le comportement d'un exemple d'un transducteur ultrasonore en réception ;

la figure 7 illustre schématiquement une étape d'émission TX et une étape de réception RX d'un mode de mise en oeuvre d'un procédé d'acquisition d'une image d'un corps au moyen d'un dispositif d'imagerie ultrasonore matriciel à adressage ligne-colonne de dimensions NxN ;

la figure 8 illustre schématiquement des étapes d'un procédé d'acquisition d'une image d'un corps au moyen d'un dispositif d'imagerie ultrasonore matriciel à adressage ligne-colonne de dimensions 2x2 ; et

la figure 9 illustre schématiquement des étapes d'un procédé d'acquisition d'une image d'un corps au moyen d'un dispositif d'imagerie ultrasonore matriciel à adressage ligne-colonne de dimensions 4x4.

## Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, les diverses applications que peuvent avoir les dispositifs et procédés d'imagerie décrits n'ont pas été détaillées, les modes de réalisation décrits étant compatibles avec les applications usuelles des solutions d'imagerie ultrasonore. En particulier, les propriétés (fréquences, formes, amplitudes, etc.) des signaux électriques d'excitation appliqués aux transducteurs ultrasonores n'ont pas été détaillées, les modes de réalisation décrits étant compatibles avec les signaux d'excitation usuellement utilisés dans les systèmes d'imagerie ultrasonore, qui peuvent être choisis en fonction de l'application considérée et en particulier de la nature du corps à analyser et du type d'information que l'on cherche à acquérir. De façon similaire, les divers traitements appliqués aux signaux électriques fournis par les transducteurs ultrasonores pour extraire des informations utiles sur le corps à analyser n'ont pas été détaillés, les modes de réalisation décrits étant compatibles avec les traitements usuellement mis en oeuvre dans les systèmes d'imagerie ultrasonore. De plus, les circuits de commande des transducteurs ultrasonores des dispositifs d'imagerie décrits n'ont pas été détaillés, les modes de réalisation étant compatibles avec tous ou la plupart des circuits connus de commande de transducteurs ultrasonores de dispositifs d'imagerie ultrasonore matriciels à adressage ligne-colonne, ou la réalisation de ces circuits étant à la portée de la personne du métier à la lecture de la présente description. En outre, la réalisation des transducteurs ultrasonores des dispositifs d'imagerie décrits n'a pas été détaillée, les modes de réalisation décrits étant compatibles avec toutes ou la plupart des structures connues de transducteurs ultrasonores.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

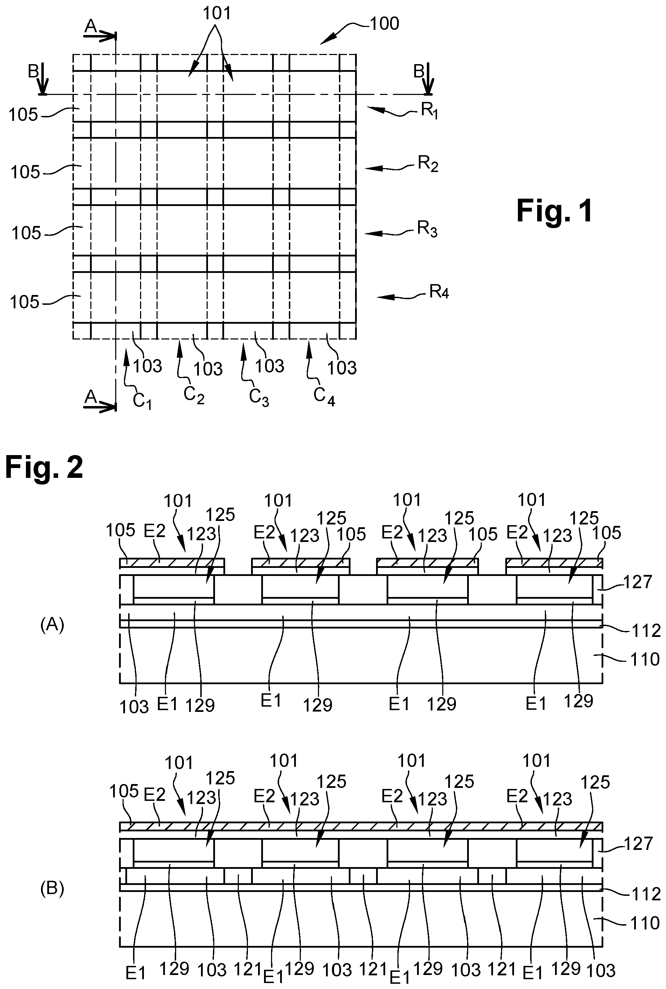

La figure 1 est une vue de dessus illustrant de façon schématique et partielle un exemple d'un dispositif d'imagerie ultrasonore matriciel à adressage ligne-colonne 100.

La figure 2 comprend deux vues en coupe (A) et (B) du dispositif 100 de la figure 1 selon respectivement les plans A-A et B-B de la figure 1.

Le dispositif 100 comprend une pluralité de transducteurs ultrasonores 101 agencés en matrice selon M lignes $R_i$ et N colonnes $C_j$, avec M et N entiers supérieurs ou égaux à 2, i entier allant de 1 à M, et j entier allant de 1 à N.

Sur la figure 1, quatre lignes $R_1$, $R_2$, $R_3$, $R_4$ et quatre colonnes $C_1$, $C_2$, $C_3$, $C_4$ ont été représentées. En pratique, les nombres M de lignes et N de colonnes du dispositif 100 peuvent bien entendu être différents de 4.

Chaque transducteur 101 du dispositif 100 comprend une électrode inférieure E1 et une électrode supérieure E2 (figures 2A et 2B). Lorsqu'une tension d'excitation appropriée est appliquée entre ses électrodes E1 et E2, le transducteur émet une onde acoustique ultrasonore. Lorsque le transducteur reçoit une onde acoustique ultrasonore dans une certaine gamme de fréquences, il fournit entre ses électrodes E1 et E2 une tension représentative de l'onde reçue.

Dans cet exemple, les transducteurs 101 sont des transducteurs capacitifs à membrane, aussi appelés transducteurs CMUT (de l'anglais "Capacitive Micromachined Ultrasonic Transducer" - transducteur ultrasonore capacitif micro-usiné) .

Dans chaque colonne $C_j$ de la matrice de transducteurs, les transducteurs 101 de la colonne ont leurs électrodes inférieures E1 respectives connectées entre elles. Les électrodes inférieures E1 de transducteurs 101 de colonnes distinctes ne sont en revanche pas connectées entre elles. De plus, dans chaque ligne $R_i$ de la matrice de transducteurs, les transducteurs 101 de la ligne ont leurs électrodes supérieures E2 respectives connectées entre elles. Les électrodes supérieures E2 de transducteurs 101 de lignes distinctes ne sont en revanche pas connectées entre elles.

Dans chaque colonne $C_j$ du dispositif 100, les électrodes inférieures E1 des transducteurs 101 de la colonne forment une bande conductrice ou semiconductrice continue 103, s'étendant sur sensiblement toute la longueur de la colonne. A titre de variante, chaque bande 103 d'électrodes E1 comprend un empilement vertical d'une bande semiconductrice et d'une bande conductrice s'étendant chacune sur sensiblement toute la longueur de la colonne. De plus, dans chaque ligne $R_i$ du dispositif 100, les électrodes supérieures E2 des transducteurs 101 de la ligne forment une bande conductrice ou semiconductrice continue 105, s'étendant sur sensiblement toute la longueur de la ligne. A titre de variante, chaque bande 105 d'électrodes E2 comprend un empilement vertical d'une bande semiconductrice et d'une bande conductrice s'étendant chacune sur sensiblement toute la longueur de la ligne. Par souci de simplification, seules les bandes d'électrodes inférieures 103 et supérieures 105 sont représentées sur la figure 1.

Dans l'exemple représenté, les bandes 103 formant les électrodes de colonne sont en un matériau semiconducteur dopé, par exemple en silicium dopé. De plus, dans cet exemple, les bandes 105 formant les électrodes de ligne sont en métal. A titre d'exemple, en vue de dessus, les bandes inférieures 103 sont parallèles entre elles, et les bandes supérieures 105 sont parallèles entre elles et perpendiculaires aux bandes 103.

Dans l'exemple de la figure 1, le dispositif 100 comprend un substrat de support 110, par exemple en un matériau semiconducteur, par exemple en silicium. La matrice de transducteurs ultrasonores 101 est disposée sur la face supérieure du substrat 110. Plus particulièrement, dans cet exemple, une couche diélectrique 112, par exemple une couche d'oxyde de silicium, fait interface entre le substrat 110 et la matrice de transducteurs ultrasonores 101. La couche diélectrique 112 s'étend par exemple de façon continue sur toute la surface supérieure du substrat de support 110. A titre d'exemple, la couche 112 est en contact, par sa face inférieure, avec la face supérieure du substrat 110, sur sensiblement toute la surface supérieure du substrat 110.

Les bandes d'électrodes inférieures 103 sont disposées sur la face supérieure de la couche diélectrique 112, par exemple en contact avec la face supérieure de la couche diélectrique 112. Les bandes 103 peuvent être séparées latéralement les unes des autres par des bandes diélectriques 121, par exemple en oxyde de silicium, s'étendant parallèlement aux bandes 103 et présentant une épaisseur sensiblement identique à celle des bandes 103.

Chaque transducteur 101 comporte une cavité 125 formée dans une couche support rigide 127, et une membrane flexible 123 suspendue au-dessus de la cavité 125. La couche 127 est par exemple une couche d'oxyde de silicium. La couche 127 est disposée sur la surface supérieure, par exemple sensiblement plane, de l'assemblage formé par les bandes alternées 103 et 121. Dans chaque transducteur 101, la cavité 125 est située en vis-à-vis de l'électrode inférieure E1 du transducteur.

Dans l'exemple représenté, chaque transducteur 101 comprend une unique cavité 125 en vis-à-vis de son électrode inférieure E1. A titre de variante, dans chaque transducteur 101, la cavité 125 peut être divisée en une pluralité de cavités élémentaires, par exemple disposées, en vue de dessus, en matrice selon des rangées et des colonnes, séparées latéralement les unes des autres par des parois latérales formées par des portions de la couche 127.

Dans l'exemple représenté, au fond de chaque cavité 125, une couche diélectrique 129, par exemple en oxyde de silicium, revêt l'électrode inférieure E1 du transducteur, de façon à empêcher tout contact électrique entre la membrane flexible 123 et l'électrode inférieure E1 du transducteur. A titre de variante, pour assurer cette fonction d'isolation électrique, une couche diélectrique (non représentée) peut revêtir la face inférieure de la membrane 123. Dans ce cas, la couche 129 peut être omise.

Dans chaque transducteur 101, la membrane flexible 123, revêtant la cavité 125 du transducteur, est par exemple en un matériau semiconducteur dopé ou non dopé, par exemple en silicium.

Dans chaque transducteur 101, l'électrode supérieure E2 du transducteur est disposée sur et en contact avec la face supérieure de la membrane flexible 123 du transducteur, à l'aplomb de la cavité 125 et de l'électrode inférieure E1 du transducteur. A titre de variante, dans le cas d'une membrane semiconductrice, l'électrode supérieure E2 de chaque transducteur 101 peut être formée par la membrane elle-même, auquel cas la couche 105 peut être omise.

A titre d'exemple, dans chaque ligne $R_i$ du dispositif 100, les membranes flexibles 123 des transducteurs 101 de la ligne forment une bande de membrane continue s'étendant sur sensiblement toute la longueur de la ligne, séparée latéralement des bandes de membrane des lignes voisines par une région diélectrique. Dans chaque ligne $R_i$, la bande de membrane 123 de la ligne coïncide par exemple, en vue de dessus, avec la bande d'électrodes supérieures 105 de la ligne.

Pour chaque ligne $R_i$ de la matrice de transducteurs 101, le dispositif 100 peut comprendre un circuit d'émission, un circuit de réception, et un commutateur commandable pour, dans une première configuration, connecter les électrodes E2 des transducteurs de la ligne à une borne de sortie du circuit d'émission de la ligne, et, dans une deuxième configuration, connecter les électrodes E2 des transducteurs de la ligne à une borne d'entrée du circuit de réception de la ligne.

De plus, pour chaque colonne $C_j$ de la matrice de transducteurs 101, le dispositif 100 peut comprendre un circuit d'émission, un circuit de réception, et un commutateur commandable pour, dans une première configuration, connecter les électrodes E1 des transducteurs de la colonne à une borne de sortie du circuit d'émission de la colonne, et, dans une deuxième configuration, connecter les électrodes E1 des transducteurs de la colonne à une borne d'entrée du circuit de réception de la colonne.

Par souci de simplification, les circuits d'émission et de réception et les commutateurs du dispositif 100 n'ont pas été représentés sur les figures. De plus, la réalisation de ces éléments n'a pas été détaillée, les modes de réalisation décrits étant compatibles avec les réalisations usuelles de circuits d'émission/réception de dispositifs d'imagerie ultrasonore matriciels à adressage ligne-colonne. A titre d'exemple, non limitatif, les circuits d'émission/réception peuvent être identiques ou similaires à ceux décrits dans la demande de brevet français N°19/06515 déposée par la demanderesse le 18 juin 2019.

L'acquisition d'une image ultrasonore d'un corps au moyen d'un dispositif d'imagerie ultrasonore matriciel à adressage ligne-colonne, par exemple du type décrit en relation avec les figures 1 et 2, peut comprendre une phase d'émission d'une onde ultrasonore, suivie d'une phase de réception d'une onde ultrasonore retour, réfléchie par le corps.

A titre d'exemple, pendant la phase d'émission, les électrodes de ligne de la matrice de transducteur (correspondant aux électrodes 105 dans l'exemple des figures 1 et 2) sont maintenues à un potentiel de référence fixe, par exemple la masse, et un potentiel de polarisation continu $V_{bias}$ est appliqué sur chacune des électrodes de colonne de la matrice (correspondant aux électrodes 103 dans l'exemple des figures 1 et 2). Une tension d'excitation alternative $V_{exc}$ est en outre appliquée sur chacune des électrodes de colonne de la matrice. Ainsi, chaque transducteur 101 de la matrice voit, entre ses électrodes E1 et E2, la tension d'excitation alternative $V_{exc}$ superposée à une tension de polarisation continue $V_{bias}$. Ceci provoque une vibration de la membrane du transducteur, conduisant à l'émission d'une onde acoustique ultrasonore.

Pendant la phase de réception, les électrodes de colonne peuvent être maintenues au potentiel de polarisation continu $V_{bias}$. Une tension alternative superposée à la tension de polarisation continue $V_{bias}$ apparait alors entre les électrodes E1 et E2 de chaque transducteur 101 sous l'effet de l'onde acoustique retour. Les tensions alternatives produites individuellement par les transducteurs élémentaires de la matrice, aussi appelées contributions individuelles des transducteurs élémentaires, se combinent sur les électrodes de ligne et de colonne de la matrice et des tensions résultantes peuvent être lues sur lesdites électrodes de ligne et de colonne.

Un objet d'un mode de réalisation est de prévoir un procédé d'acquisition d'une image ultrasonore au moyen d'un dispositif d'imagerie ultrasonore matriciel à adressage ligne-colonne, permettant de remonter aux contributions individuelles des transducteurs élémentaires de la matrice, de façon à bénéficier à la fois des avantages des dispositifs entièrement peuplés en termes de résolution d'imagerie, et des dispositifs à adressage ligne-colonne en termes de complexité électronique.

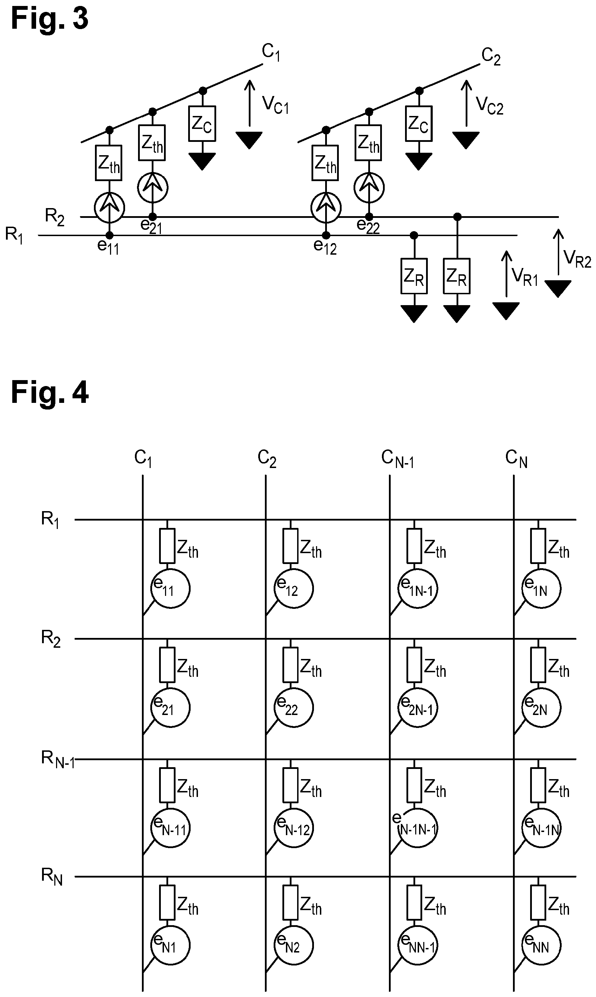

La figure 3 est un schéma électrique équivalent d'un dispositif d'imagerie ultrasonore matriciel à adressage ligne-colonne de 2 lignes et 2 colonnes, pendant une phase de réception d'une onde ultrasonore.

Chaque transducteur élémentaire peut être modélisé par un générateur de tension $e_{ij}$ en série avec une impédance $Z_{th}$ entre une électrode de ligne $R_i$ (correspondant à une électrode 105 dans l'exemple d'implémentation des figures 1 et 2) et une électrode de colonne $C_j$ (correspondant à une électrode 103 dans l'exemple d'implémentation des figures 1 et 2). Chaque valeur de tension $e_{ij}$ est représentative de la vibration du transducteur élémentaire de coordonnées i,j dans la matrice sous l'effet de l'onde ultrasonore reçue, et correspond à la contribution individuelle du transducteur élémentaire aux tensions mesurées sur les électrodes de ligne et/ou de colonne du dispositif. On a en outre représenté, pour chaque ligne de la matrice, une impédance de charge $Z_R$ entre l'électrode de ligne $R_i$ et la masse, et, pour chaque colonne de la matrice, une impédance de charge $Z_c$ entre l'électrode de colonne $C_j$ et la masse. Les impédances $Z_{th}$ des différents transducteurs élémentaires de la matrice sont par exemple toutes identiques ou sensiblement identiques. Les impédances de charge $Z_R$ connectées aux différentes électrodes de ligne $R_i$ de la matrice sont par exemple toutes identiques ou sensiblement identiques. Les impédances de charge $Z_c$ connectées aux différentes électrodes de colonne $C_j$ de la matrice sont par exemple toutes identiques ou sensiblement identiques. On désigne ici par $V_{Ri}$ la tension alternative apparaissant sur la ligne $R_i$ lors d'une phase de réception d'une onde ultrasonore, et par $V_{cj}$ la tension alternative apparaissant sur la colonne $C_j$ lors d'une phase de réception d'une onde ultrasonore.

Par application du principe de superposition, on peut écrire le système d'équations suivant :

[Math 1]

$$\begin{cases} V_{R1} = a_{11R1} * e_{11} + a_{12R1} * e_{12} + a_{21R1} * e_{21} + a_{22R1} * e_{22} \\ V_{R2} = a_{11R2} * e_{11} + a_{12R2} * e_{12} + a_{21R2} * e_{21} + a_{22R2} * e_{22} \\ V_{C1} = a_{11C1} * e_{11} + a_{12C1} * e_{12} + a_{21C1} * e_{21} + a_{22C1} * e_{22} \\ V_{C2} = a_{11C2} * e_{11} + a_{12C2} * e_{12} + a_{21C2} * e_{21} + a_{22C2} * e_{22} \end{cases}$$

où chaque coefficient $a_{ijRk}$ est représentatif du poids de la contribution du générateur $e_{ij}$ à la tension $V_{Rk}$ de la ligne $R_k$, avec k entier allant de 1 à N, et où chaque coefficient $a_{ijck}$ est représentatif du poids de la contribution du générateur $e_{ij}$ à la tension $V_{ck}$ de la colonne $C_k$.

La figure 4 est un schéma électrique équivalent d'un dispositif d'imagerie ultrasonore matriciel à adressage ligne-colonne de N lignes et N colonnes. Le schéma électrique équivalent de la figure 4 est similaire à celui de la figure 2. Par soucis de simplification, les impédances de charge $Z_R$ connectées sur les lignes et les impédances de charge $Z_c$ connectées sur les colonnes n'ont pas été représentées sur la figure 4.

En reprenant les notations précédentes, le système d'équations [Math 1] susmentionné peut être réécrit sous forme matricielle comme suit : [A]*[e]=[V]

Avec :

[Math 2]

$$[A] = \begin{bmatrix} a_{11R1} & a_{12R1} & \cdots & a_{N(N-1)R1} & a_{NNR1} \\ a_{11R2} & a_{12R2} & \cdots & a_{N(N-1)R2} & a_{NNR2} \\ \cdots & \cdots & \cdots & \cdots & \cdots \\ a_{11RN} & a_{12RN} & \cdots & a_{N(N-1)RN} & a_{NNRN} \\ a_{11C1} & a_{12C1} & \cdots & a_{N(N-1)C1} & a_{NNC1} \\ \cdots & \cdots & \cdots & \cdots & \cdots \\ a_{11C(N-1)} & a_{12C(N-1)} & \cdots & a_{N(N-1)C(N-1)} & a_{NNC(N-1)} \\ a_{11CN} & a_{12CN} & \cdots & a_{N(N-1)CN} & a_{NNCN} \end{bmatrix}$$

Et :

[Math 3]

$$[e] = \begin{bmatrix} e_{11} \\ e_{12} \\ \vdots \\ e_{NN-1} \\ e_{NN} \end{bmatrix}$$

Et :

[Math 4]

$$[V] = \begin{bmatrix} V_{R1} \\ \vdots \\ V_{RN} \\ V_{C1} \\ \vdots \\ V_{CN} \end{bmatrix}$$

Les 2N*(N*N) coefficients de la matrice [A] peuvent être déterminés au préalable lors d'une phase de caractérisation ou de simulation du dispositif, et stockés dans une mémoire d'un dispositif électronique de traitement. Les 2N*(N*N) coefficients de la matrice [A] sont par exemple non nuls et non unitaires (en valeur absolue).

Les 2N tensions du vecteur [V] peuvent être lues sur les électrodes de ligne et de colonne de la matrice.

On obtient ainsi un système à 2N équations et N*N inconnues (les N*N valeurs de tension $e_{ij}$).

En l'état, ce système ne peut pas être résolu, le nombre d'équations indépendantes étant inférieur au nombre d'inconnues.

Selon un aspect d'un mode de réalisation, on prévoit, comme cela sera expliqué plus en détail ci-après, d'augmenter le nombre d'équations discriminantes du système, en réalisant plusieurs tirs ("firings" en anglais) successifs d'une même onde ultrasonore (c'est-à-dire d'un faisceau de mêmes caractéristiques) en direction du corps à analyser, et en modifiant à chaque fois, lors de la phase de réception de l'onde retour, le signe d'au moins un générateur $e_{ij}$.

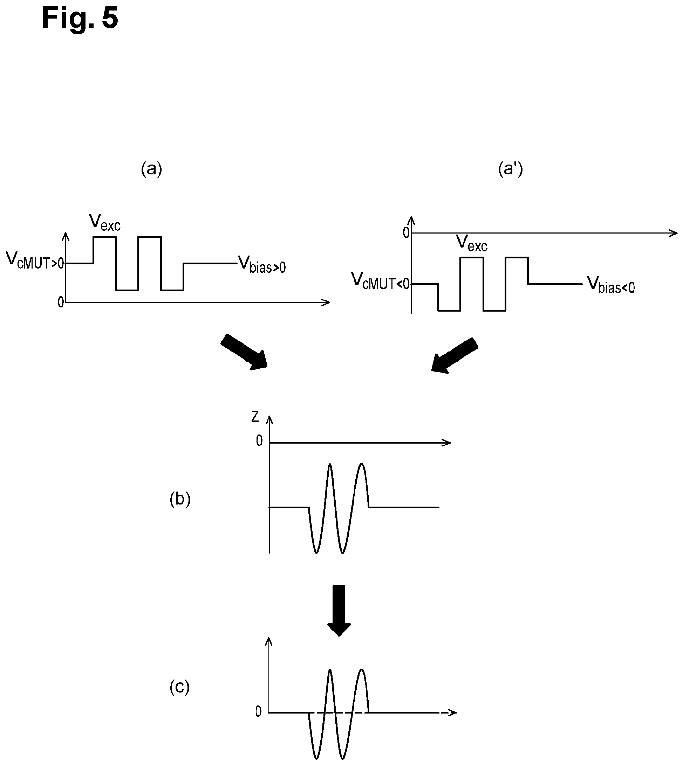

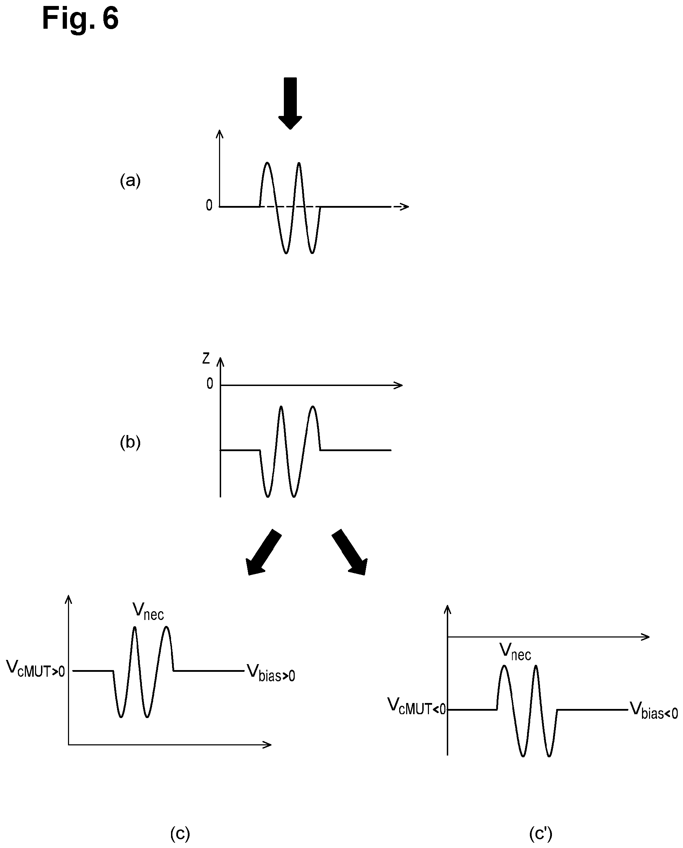

Selon un mode de réalisation préféré, on prévoit, à chaque tir, de modifier le signe de la tension de polarisation appliquée sur au moins une des électrodes de colonne de la matrice lors de la phase de réception de l'onde retour, de façon à inverser le signe de tous les générateurs $e_{ij}$ de ladite au moins une colonne. On tire ainsi profit du comportement symétrique en tension des transducteurs CMUT, qui va être rappelé ci-après en relation avec les figures 5 et 6. Plus généralement, le mode de réalisation préféré détaillé ci-après s'applique à tout type de transducteur présentant un comportement symétrique, notamment en réception, par exemple des transducteurs PMUT (de l'anglais "Piezoelectric Micromachined Ultrasonic Transducers" - transducteur ultrasonore piézoélectrique micro-usiné). Par comportement symétrique en réception, on entend ici que le signe de la tension alternative produite par le transducteur lors d'une phase de réception d'une onde ultrasonore s'inverse lorsque le signe de la tension de polarisation continue appliquée au transducteur pendant cette même phase de réception est inversé.

La figure 5 illustre schématiquement le comportement d'un exemple d'un transducteur CMUT en émission.

La figure 5 comprend un diagramme (a) représentant un exemple de tension $V_{cMUT}$ pouvant être appliquée entre les électrodes du transducteur lors d'une phase d'émission. Dans cet exemple, la tension $V_{cMUT}$ est une tension positive correspondant à la superposition (ou somme) d'une tension de polarisation continue $V_{bias}$ positive, et d'une tension d'excitation alternative $V_{exc}$. Dans cet exemple, la tension alternative d'excitation est une tension en créneau comprenant successivement un état haut, un état bas, un état haut, et un état bas.

L'application de la tension $V_{cMUT}$ aux bornes du transducteur conduit à un déplacement vibratoire de la membrane du transducteur selon un axe z orthogonal à la membrane, illustré par un diagramme (b) sur la figure 5. Dans ce diagramme, la position 0 correspond à la position d'équilibre mécanique de la membrane, en l'absence de toute polarisation électrique.

Ce déplacement vibratoire de la membrane conduit à l'émission d'une onde acoustique illustrée par un diagramme (c) sur la figure 5.

La figure 5 comprend en outre un diagramme (a') représentant un autre exemple d'une tension $V_{cMUT}$ pouvant être appliquée entre les électrodes du transducteur lors d'une phase d'émission. Dans cet exemple, la tension $V_{cMUT}$ est une tension négative correspondant à l'opposée de la tension $V_{cMUT}$ du diagramme (a). Ainsi, dans cet exemple, la tension $V_{cMUT}$ correspond à la superposition d'une tension de polarisation continue $V_{bias}$ négative, et d'une tension d'excitation alternative $V_{exc}$. La tension de polarisation continue $V_{bias}$ du diagramme (a') correspond à l'opposée de la tension de polarisation continue $V_{bias}$ du diagramme (a), et la tension d'excitation alternative $V_{exc}$ du diagramme (a') correspond à l'opposée de la tension d'excitation alternative $V_{exc}$ du diagramme (a). Ainsi, dans cet exemple, la tension alternative d'excitation est une tension en créneau comprenant successivement un état bas, un état haut, un état bas, et un état haut.

Comme l'illustre la figure 5, l'application de la tension $V_{cMUT}$ du diagramme (a') aux bornes du transducteur conduit à un déplacement vibratoire identique à celui obtenu avec l'application de la tension $V_{cMUT}$ du diagramme (a), et, par conséquent à l'émission d'une onde acoustique identique à celle obtenue avec l'application de la tension $V_{cMUT}$ du diagramme (a). Ainsi, l'inversion du signe de la tension appliquée au transducteur ne modifie pas le comportement du transducteur en émission.

La figure 6 illustre schématiquement le comportement d'un exemple d'un transducteur CMUT en réception.

La figure 6 comprend un diagramme (a) représentant un exemple d'une onde acoustique reçue par le transducteur CMUT.

La figure 6 comprend en outre un diagramme (b) illustrant le déplacement vibratoire de la membrane du transducteur sous l'effet de l'onde acoustique reçue, lorsque le transducteur est polarisé à une tension continue $V_{bias}$. On notera que ce déplacement est indépendant du signe, positif ou négatif, de la tension $V_{bias}$.

La figure 6 comprend en outre un diagramme (c) représentant la tension $V_{cMUT}$ aux bornes du transducteurs lors d'une phase de réception. Dans cet exemple, la tension de polarisation continue $V_{bias}$ appliquée aux bornes du transducteur est une tension positive. La tension $V_{cMUT}$ est alors une tension positive correspondant à la superposition ou somme de la tension $V_{bias}$, et d'une tension alternative $V_{rec}$ générée sous l'effet de la vibration de la membrane.

La figure 6 illustre de plus un diagramme (c') représentant la tension $V_{cMUT}$ aux bornes du transducteurs lors d'une phase de réception. Dans cet exemple, la tension de polarisation continue $V_{bias}$ appliquée aux bornes du transducteur est une tension négative. Plus particulièrement, dans cet exemple, la tension de polarisation continue $V_{bias}$ appliquée aux bornes du transducteur est l'opposée de celle appliquée dans l'exemple du diagramme (c). La tension $V_{cMUT}$ est alors une tension négative correspondant à la superposition de la tension $V_{bias}$, et d'une tension alternative $V_{rec}$ générée sous l'effet de la vibration de la membrane. Comme l'illustre la figure 6, la tension $V_{rec}$ du diagramme (c') est l'opposée de la tension $V_{rec}$ du diagramme (c). Ainsi, l'inversion du signe de la tension de polarisation continue $V_{bias}$ en réception conduit à une inversion du signe de la tension alternative $V_{rec}$ générée aux bornes du transducteur sous l'effet d'une onde acoustique reçue.

En reprenant les notations précédentes et en considérant un transducteur élémentaire d'un dispositif d'imagerie ultrasonore matriciel à adressage ligne-colonne, la tension alternative $V_{rec}$ apparaissant aux bornes du transducteur sous l'effet d'une onde acoustique reçue correspond à la contribution $e_{ij}$ du transducteur aux signaux de tension lus sur les électrodes de ligne $R_i$ ou de colonne $C_j$ du dispositif.

Ainsi, en inversant la tension de polarisation continue $V_{bias}$ d'une colonne en réception, on inverse le signe des contributions $e_{ij}$ des transducteurs de la colonne. Ceci permet, comme cela sera décrit plus en détail ci-après, d'obtenir des équations discriminantes supplémentaires permettant de remonter aux contributions individuelles des transducteurs élémentaires de la matrice.

On notera que dans la mesure où la réponse des transducteurs reste linéaire, un même coefficient de pondération peut être appliqué sur les tensions de polarisation continues $V_{bias}$ et/ou sur les tensions alternatives d'excitation $V_{exc}$, ce coefficient pouvant être modifié entre deux tirs successifs ou entre deux phases de réception successives du procédé. Une rectification peut être appliquée lors de la reconstruction des contributions individuelles des transducteurs pour tenir compte de cette pondération.

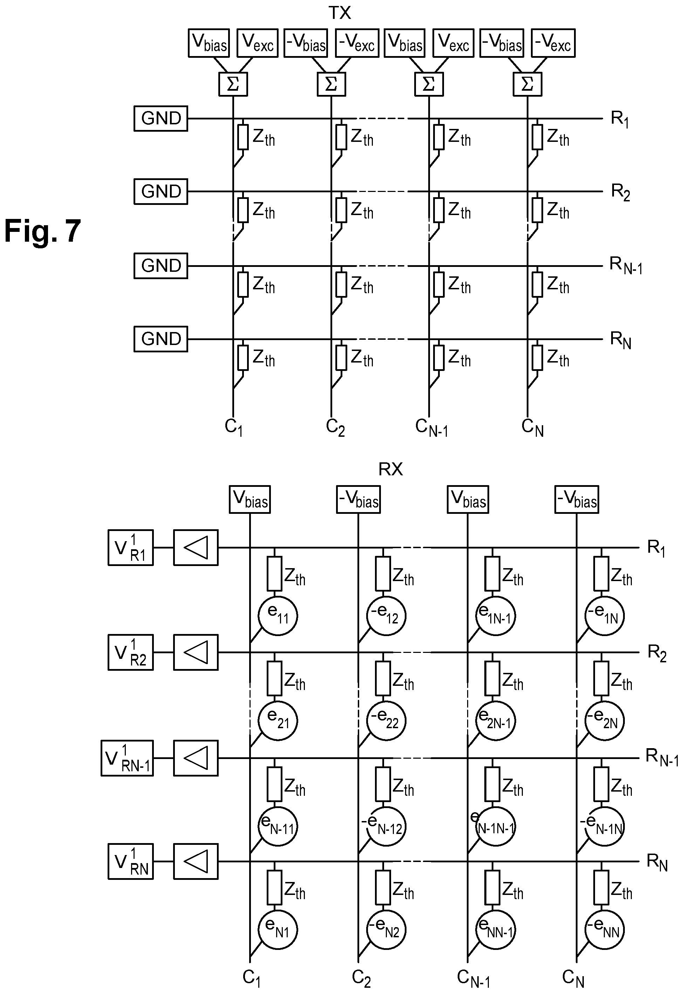

La figure 7 illustre schématiquement une étape d'émission TX et une étape de réception RX d'un procédé d'acquisition d'une image d'un corps au moyen d'un dispositif d'imagerie ultrasonore matriciel à adressage ligne-colonne de dimensions NxN.

Dans cet exemple, pendant la phase d'émission TX, une tension de polarisation continue $V_{bias}$ et une tension d'excitation alternative $V_{exc}$ sont appliquées sur les électrodes de colonne $C_j$ de rang impair, et une tension de polarisation continue opposée $-V_{bias}$ et une tension d'excitation alternative opposée $-V_{exc}$ sont appliquées sur les électrodes de colonne $C_j$ de rang pair. Sur la figure 7, chaque transducteur élémentaire est représenté par une impédance $Z_{th}$ pendant la phase d'émission TX. Pendant la phase de réception RX, les tensions de polarisation continues $V_{bias}$ et $-V_{bias}$ appliquées respectivement sur les électrodes de colonne $C_j$ de rang impair et sur les électrodes de colonne $C_j$ de rang pair restent inchangées.

Comme expliqué ci-dessus en relation avec la figure 5, l'inversion du signe des tensions $V_{bias}$ et $V_{exc}$ sur les colonnes de rang pair n'a pas d'impact sur l'onde acoustique émise par les transducteurs de la colonne. Autrement dit, l'onde ultrasonore émise est la même que si les signes des tensions $V_{bias}$ et $V_{exc}$ étaient les mêmes sur toutes les colonnes.

En réception, l'inversion du signe de la tension de polarisation continue dans les colonnes de rang pair conduit en revanche à inverser les signes des contributions $e_{ij}$ des transducteurs élémentaires desdites colonnes, comme exposé ci-dessus en relation avec la figure 6.

En réalisant plusieurs tirs successifs d'une même onde ultrasonore, en modifiant à chaque fois le signe des tensions de polarisation appliquées sur certaines colonnes en phase de réception, et en effectuant des combinaisons linéaires des tensions mesurées sur les électrodes de ligne $R_i$, il est possible de remonter aux contributions individuelles $e_{ij}$ de chacun des transducteurs élémentaires de la matrice.

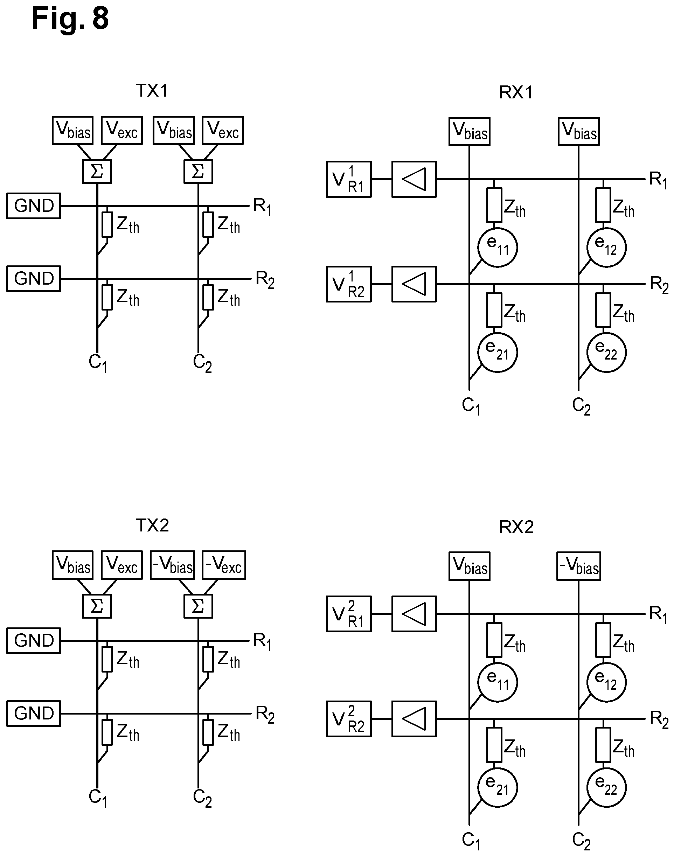

La figure 8 illustre schématiquement un exemple d'un mode de mise en oeuvre d'un procédé d'acquisition d'une image d'un corps au moyen d'un dispositif d'imagerie ultrasonore matriciel à adressage ligne-colonne de dimensions 2x2.

Le procédé de la figure 8 comprend deux tirs successifs d'une même onde ultrasonore en direction du corps à analyser.

Plus particulièrement, le procédé comprend une première étape d'émission TX1 d'une onde ultrasonore (premier tir), suivie d'une première étape de réception RX1 d'une onde retour réfléchie par le corps à analyser, suivie d'une deuxième étape d'émission TX2 d'une onde ultrasonore (deuxième tir) identique à celle émise à l'étape TX1, suivie d'une deuxième étape de réception RX2 d'une onde retour réfléchie par le corps à analyser.

Lors de l'étape d'émission TX1, les électrodes de colonne $C_1$ et $C_2$ sont polarisées à une même tension continue $V_{bias}$, et reçoivent une même tension alternative d'excitation $V_{exc}$ superposée à la tension $V_{bias}$.

Lors de la phase de réception RX1, les électrodes de colonne $C_1$ et $C_2$ restent polarisées à la tension $V_{bias}$, et des tensions alternatives $V_{R1}^1$ et $V_{R2}^1$ sont lues respectivement sur les électrodes de ligne $R_1$ et $R_2$.

Le système d'équations suivant peut ainsi alors écrit :

[Math 5]

$$\begin{cases} V_{R1}^1 = a_{11R1} * e_{11} + a_{12R1} * e_{12} + a_{21R1} * e_{21} + a_{22R1} * e_{22} \\ V_{R2}^1 = a_{11R2} * e_{11} + a_{12R2} * e_{12} + a_{21R2} * e_{21} + a_{22R2} * e_{22} \end{cases}$$

Lors de l'étape d'émission TX2, les électrodes de colonne $C_1$ et $C_2$ sont polarisées respectivement à la tension $V_{bias}$ et à la tension $-V_{bias}$, et reçoivent respectivement la tension alternative d'excitation $V_{exc}$ et la tension alternative d'excitation opposée $-V_{exc}$.

Lors de la phase de réception RX2, les électrodes de colonne $C_1$ et $C_2$ restent polarisées respectivement à la tension $V_{bias}$ et à la tension $-V_{bias}$, et des tensions alternatives $V_{R1}^2$ et $V_{R2}^2$ sont lues respectivement sur les électrodes de ligne $R_1$ et $R_2$.

Le système d'équations suivant peut ainsi alors écrit :

[Math 6]

$$\begin{cases} V_{R1}^2 = a_{11R1} * e_{11} - a_{12R1} * e_{12} + a_{21R1} * e_{21} - a_{22R1} * e_{22} \\ V_{R2}^2 = a_{11R2} * e_{11} - a_{12R2} * e_{12} + a_{21R2} * e_{21} - a_{22R2} * e_{22} \end{cases}$$

En sommant les deux systèmes d'équations [Math 5] et [Math 6] ci-dessus, on obtient un système à deux équations et deux inconnues pouvant être réécrit sous forme matricielle comme suit : [A]*[e]=[V], avec :

[Math 7]

$$[A] = \begin{bmatrix} a_{11R1} & a_{21R1} \\ a_{11R2} & a_{21R2} \end{bmatrix}$$

Et :

[Math 8]

$$[e] = \begin{bmatrix} e_{11} \\ e_{21} \end{bmatrix}$$

Et :

[Math 9]

$$[V] = \begin{bmatrix} \dfrac{V_{R1}^1 + V_{R1}^2}{2} \\ \dfrac{V_{R2}^1 + V_{R2}^2}{2} \end{bmatrix}$$

La matrice A étant inversible, le système peut être résolu, ce qui permet de déterminer les contributions respectives $e_{11}$ et $e_{21}$ des transducteurs élémentaires de rang i=1 et de rang i=2 de la colonne de rang j=1.

De façon similaire, en soustrayant les deux systèmes d'équations [Math 5] et [Math 6] ci-dessus, on obtient un système à deux équations et deux inconnues pouvant être réécrit sous forme matricielle comme suit : [A]*[e]=[V], avec :

[Math 10]

$$[A] = \begin{bmatrix} a_{12R1} & a_{22R1} \\ a_{12R2} & a_{22R2} \end{bmatrix}$$

Et :

[Math 11]

$$[e] = \begin{bmatrix} e_{12} \\ e_{22} \end{bmatrix}$$

Et :

[Math 12]

$$[V] = \begin{bmatrix} \dfrac{V_{R1}^1 - V_{R1}^2}{2} \\ \dfrac{V_{R2}^1 - V_{R2}^2}{2} \end{bmatrix}$$

La encore, la matrice A étant inversible, le système peut être résolu, ce qui permet de déterminer les contributions respectives $e_{12}$ et $e_{22}$ des transducteurs élémentaires de rang i=1 et de rang i=2 de la colonne de rang j=2.

Ainsi, au moyen de deux tirs d'une même onde ultrasonore, en inversant le signe de la tension de polarisation $V_{bias}$ de l'une des colonnes entre les deux phases de réception correspondantes, et en réalisant des combinaisons linéaires des tensions alternatives mesurées en réception sur les électrodes, on peut remonter aux contributions individuelles $e_{ij}$ de chacun des quatre transducteurs élémentaires de la matrice.

On notera que comme cela a été exposé ci-dessus en relation avec la figure 5, l'inversion du signe des tensions de polarisation $V_{bias}$ et d'excitation $V_{exc}$ pendant la phase d'émission n'a pas d'effet sur l'onde ultrasonore émise. Ainsi, on pourrait prévoir de réaliser les deux tirs avec les mêmes tensions de polarisation et d'excitation, et modifier le signe de la tension de polarisation de l'une des colonnes uniquement pendant la phase de réception RX2. En pratique, il peut toutefois s'avérer délicat d'inverser le signe de la tension de polarisation d'une colonne entre la phase d'émission et la phase de réception d'une même onde ultrasonore. On modifiera donc de préférence le signe de la tension de polarisation de l'électrode de colonne $C_2$ dès la phase d'émission TX2.

Ce mode de fonctionnement peut être généralisé quel que soit le nombre N de lignes et de colonnes de la matrice.

Pour une matrice de dimensions NxN, il conviendra de réaliser au moins N tirs successifs TX1, ... TXN, en modifiant à chaque fois le signe de la tension de polarisation appliquée sur au moins l'une des électrodes de colonne de la matrice pendant la phase de réception subséquente respective RX1, ... RXN.

De préférence, les signes des tensions de polarisations appliquées respectivement sur les N électrodes de colonne $C_1$, ... $C_N$ lors des N phases de réception RX1, ... RXN sont codés par les vecteurs d'une matrice orthogonale, par exemple une matrice de Hadamard. En utilisant N combinaisons linéaires des mesures de tension réalisées sur les électrodes de ligne $R_i$ de la matrice, on obtient N sous-systèmes d'équations matriciels de type [A]*[e]=[V] avec, pour chaque sous-système, une matrice A inversible de dimensions N*N. On peut ainsi remonter aux contributions individuelles $e_{ij}$ des N*N transducteurs élémentaires du dispositif.

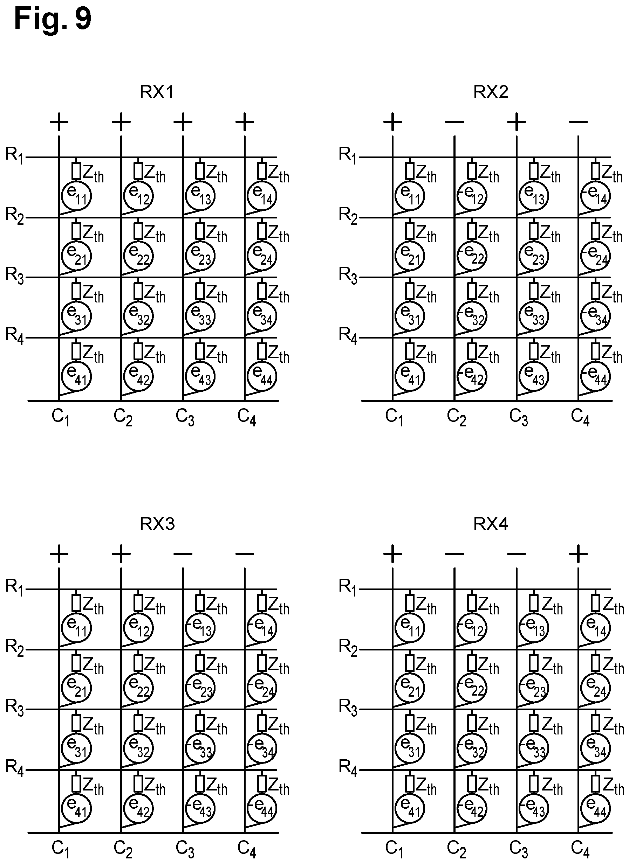

La figure 9 illustre schématiquement, à titre d'exemple illustratif, un mode de mise en oeuvre d'un procédé d'acquisition d'une image d'un corps au moyen d'un dispositif d'imagerie ultrasonore matriciel à adressage ligne-colonne de dimensions 4x4. La personne du métier saura adapter le procédé décrit quel que soit le nombre N de lignes et de colonnes du dispositif.

La figure 9 représente plus particulièrement les signes des tensions de polarisation appliquées sur les électrodes de colonne $C_j$ de la matrice lors des quatre phases de réception successives RX1, RX2, RX3 et RX4 du procédé. Sur cette figure, on a représenté un signe + en tête de colonne lorsque la tension de polarisation appliquée à la colonne est égale à $V_{bias}$, et un signe - en tête de colonne lorsque la tension de polarisation appliquée à la colonne est égale à $-V_{bias}$.

Lors de la phase de réception RX1 suivant le premier tir, les électrodes de colonne $C_1$, $C_2$, $C_3$ et $C_4$ sont toutes polarisées positivement (++++). Lors de la phase de réception RX2 suivant le deuxième tir, les électrodes de colonne $C_1$, $C_2$, $C_3$ et $C_4$ sont polarisées respectivement positivement, négativement, positivement et négativement (+-+-). Lors de la phase de réception RX3 suivant le troisième tir, les électrodes de colonne $C_1$, $C_2$, $C_3$ et $C_4$ sont polarisées respectivement positivement, positivement, négativement et négativement (++--). Lors de la phase de réception RX4 suivant le quatrième tir, les électrodes de colonne $C_1$, $C_2$, $C_3$ et $C_4$ sont polarisées respectivement positivement, négativement, négativement et positivement (+--+).

Pour chacune des phases de réception RX1, RX2, RX3 et RX4, un système d'équations du même type que les systèmes [Math 5] et [Math 6] décrits ci-dessus peut être écrit, avec, à chaque fois, N équations par système et N*N termes

$a_{ijRi}{}^*e_{ij}$ par équation.

On désigne ci-après par T1, T2, T3 et T4 les N=4 systèmes d'équations correspondants.

En réalisant N=4 combinaisons linéaires des systèmes T1, T2, T3 et T4, on obtient N=4 sous-systèmes d'équations matriciels de type [A]*[e]=[V] avec, pour chaque sous-système, une matrice A inversible de dimensions N*N=16. Ceci permet de remonter aux contributions individuelles $e_{ij}$ des N*N=16 transducteurs élémentaires du dispositif.

Les N combinaisons linéaires des systèmes T1, T2, T3 et T4 sont par exemple codées par les mêmes vecteurs que ceux utilisés pour coder les signes des tensions de polarisation appliquées sur les colonnes de la matrice lors de N phase de réception RXi.

En réalisant la sommation T1+T2+T3+T4, on obtient un premier sous-système de type [A]*[e]=[V]

Avec :

[Math 16]

$$[A] = \begin{bmatrix} a_{11R1} & a_{21R1} & a_{31R1} & a_{41R1} \\ a_{11R2} & a_{21R2} & a_{31R2} & a_{41R2} \\ a_{11R3} & a_{21R3} & a_{31R3} & a_{41R3} \\ a_{11R4} & a_{21R4} & a_{31R4} & a_{41R4} \end{bmatrix}$$

Et :

[Math 17]

$$[e] = \begin{bmatrix} e_{11} \\ e_{21} \\ e_{31} \\ e_{41} \end{bmatrix}$$

Et :

[Math 18]

$$[V] = \begin{bmatrix} \dfrac{V_{R1}^1 + V_{R1}^2 + V_{R1}^3 + V_{R1}^4}{4} \\ \dfrac{V_{R2}^1 + V_{R2}^2 + V_{R2}^3 + V_{R2}^4}{4} \\ \dfrac{V_{R3}^1 + V_{R3}^2 + V_{R3}^3 + V_{R3}^4}{4} \\ \dfrac{V_{R4}^1 + V_{R4}^2 + V_{R4}^3 + V_{R4}^4}{4} \end{bmatrix}$$

La matrice A étant inversible, le système peut être résolu, ce qui permet de déterminer les contributions respectives $e_{i1}$ des transducteurs élémentaires de la colonne de rang j=1.

En réalisant la sommation T1-T2+T3-T4 on peut, de façon similaire, déterminer les contributions respectives $e_{i2}$ des transducteurs élémentaires de la colonne de rang j=2.

En réalisant la sommation T1+T2-T3-T4 on peut, de façon similaire, déterminer les contributions respectives $e_{i3}$ des transducteurs élémentaires de la colonne de rang j=3.

En réalisant la sommation T1-T2-T3+T4 on peut, de façon similaire, déterminer les contributions respectives $e_{i4}$ des transducteurs élémentaires de la colonne de rang j=4.

Ainsi, en réalisant N*N combinaisons linaires des N*N tensions mesurées sur les N électrodes de ligne $R_i$ à l'issue respectivement des N tirs du dispositif, et en multipliant le vecteur résultant de dimensions N*N par une matrice de N*(N*N) coefficients $a_{ijR_i}$ prédéterminés, on obtient directement les contributions respectives $e_{ij}$ des N*N transducteurs élémentaires du dispositif.

Un avantage du procédé d'acquisition proposé est qu'il permet de bénéficier à la fois des avantages des dispositifs entièrement peuplés en termes de résolution d'imagerie, et des dispositifs à adressage ligne-colonne en termes de complexité électronique.

Divers modes de réalisation et variantes ont été décrits. La personne du métier comprendra que certaines caractéristiques de ces divers modes de réalisation et variantes pourraient être combinées, et d'autres variantes apparaîtront à la personne du métier. En particulier, les modes de réalisations décrits ne se limitent pas à l'exemple particulier de réalisation de la matrice de transducteurs élémentaires décrit en relation avec les figures 1 et 2.

Par ailleurs, bien que, dans les exemples décrits ci-dessus, les tensions de polarisation continue $V_{bias}$ et $-V_{bias}$ appliquées sur les différentes électrodes de colonne $C_j$ du dispositif soient toutes de même amplitude en valeur absolue, les modes de réalisation décrits ne se limitent pas à ce cas particulier. A titre de variante, les niveaux d'amplitude des tensions de polarisation continues appliquées sur les différentes électrodes de colonne $C_j$, en émission et/ou en réception, peuvent être différentiés. De façon similaire, les tensions alternatives d'excitation $V_{exc}$ appliquées sur les électrodes de colonne $C_j$ en émission peuvent être différentiées par colonne.

En outre, les modes de réalisation décrits ne se limitent pas aux exemples détaillés ci-dessus dans lesquels l'inversion du signe de la contribution $e_{ij}$ des transducteurs élémentaires d'une colonne est obtenue en inversant le signe de la tension de polarisation continue $V_{bias}$ appliquée à cette colonne. Plus généralement, tout autre moyen permettant d'inverser le signe de la contribution $e_{ij}$ d'un ou plusieurs transducteurs élémentaires entre deux tirs successifs d'une même onde ultrasonore peut être prévu. A titre d'exemple, chaque transducteur élémentaire de position (i,j) dans la matrice est associé à un système de commutateurs, par exemple des interrupteurs électromécaniques, permettant d'inverser le sens de connexion des électrodes du transducteur entre les électrodes de ligne $R_i$ et de colonne $C_j$ de la matrice. Autrement dit, dans une première configuration du système de commutateurs, le transducteur a une première électrode connectée à l'électrode $R_i$ et une deuxième électrode connectée à l'électrode $C_j$, et, dans une deuxième configuration du système de commutateurs, le transducteur a sa première électrode connectée à l'électrode $C_j$ et sa deuxième électrode connectée à l'électrode $R_i$. Ainsi, en changeant, entre deux tirs successifs d'une même onde ultrasonore, la configuration du système de commutateurs associé à un transducteur élémentaire de position (i,j), on inverse le signe de la contribution $e_{ij}$ de ce transducteur. Ceci permet d'augmenter le nombre d'équations discriminantes du système et ainsi de remonter aux contributions individuelles $e_{ij}$ de l'ensemble des transducteurs élémentaires de la matrice. Dans ce mode de réalisation, les systèmes de commutateurs associés aux transducteurs individuels peuvent être commandés individuellement, transducteur par transducteur, ou simultanément par colonne. On notera que ce mode de réalisation est compatible avec tout type de transducteurs ultrasonores, y compris des transducteurs ne présentant pas un comportement symétrique en tension. En particulier, ce mode de réalisation n'est pas limité aux transducteurs CMUT et PMUT.

De plus, bien que l'on ait décrit ci-dessus des exemples de mise en oeuvre basés sur des mesures de tension sur les électrodes du dispositif, les modes de réalisation décrits ne se limitent pas à ce cas particulier. A titre de variante, les modes de réalisation décrits peuvent être adaptés pour remonter aux contributions individuelles des transducteurs élémentaires à partir de mesures d'une autre grandeur électrique variable, par exemple un courant, des charges ou une impédance, sur les électrodes du dispositif.

En outre, bien que les exemples détaillés ci-dessus du procédé d'acquisition proposé aient été donnés pour des matrices de transducteurs carrées de N lignes par N colonnes, les modes de réalisation décrits ne se limitent pas à ce cas particulier. A la lecture de la présente description, la personne du métier saura adapter le procédé proposé à des dispositifs matriciels de M lignes par N colonnes, avec M différent de N.

Par ailleurs, dans les exemples de réalisation décrits ci-dessus, à chaque tir de l'onde ultrasonore, l'onde est générée par le même dispositif matriciel que celui utilisé pour la réception de l'onde retour. Les modes de réalisation décrits ne se limitent toutefois pas à ce cas particulier. A titre de variante, la matrice de transducteur est utilisée uniquement comme dispositif récepteur, pour recevoir l'onde ultrasonore renvoyée par le corps à analyser, et un dispositif émetteur séparé (non détaillé) est utilisé pour émettre l'onde ultrasonore en direction du corps à analyser. Le dispositif émetteur et le dispositif récepteur sont alors synchronisés pour mettre en oeuvre les N phases d'émission TX et les N phases de réception RX alternées.

En outre, la mise en oeuvre pratique des modes de réalisation et variantes décrits est à la portée de la personne du métier à partir des indications fonctionnelles données ci-dessus. En particulier, la réalisation des circuits électroniques de contrôle des dispositifs émetteur et récepteur pour mettre en oeuvre le procédé proposé n'a pas été détaillée, la réalisation de ces circuits étant à la portée de la personne du métier à la lecture de la présente description. De plus, la réalisation des dispositifs électroniques de traitement permettant de remonter aux contributions individuelles des transducteurs élémentaires à partir des grandeurs mesurées sur les électrodes du dispositif n'ont pas été détaillés, la réalisation de tels dispositifs étant à la portée de la personne du métier à partir des enseignements de la présente description.

En outre, on notera que dans les exemples décrits ci-dessus, les appellations ligne et colonnes sont arbitraires et peuvent bien entendu être inversées.

**Revendications**

1. Procédé d'acquisition d'une image d'un corps au moyen d'un dispositif d'imagerie ultrasonore matriciel à adressage ligne-colonne (100), le dispositif (100) comprenant une matrice de transducteurs ultrasonores élémentaires (101) connectés en lignes et en colonnes par respectivement des électrodes de ligne ($R_i$) et des électrodes de colonne ($C_j$), le procédé comprenant :

   - réaliser N tirs (TX1, ...TXN) successifs d'une même onde ultrasonore en direction dudit corps, où N est un entier supérieur ou égal à 2 ;
   - après chaque tir, mettre en oeuvre une phase de réception (RX1, ...RXN), au moyen dudit dispositif, d'une onde ultrasonore retour, réfléchie par ledit corps,

      dans lequel, lors de chacune des phase de réception (RX1, ...RXN), une grandeur électrique variable représentative de l'onde reçue est lue sur chaque électrode de ligne ($R_i$) du dispositif,
      et dans lequel, entre deux phases de réception quelconques parmi les N phases de réception (RX1, ...RXN), on modifie le signe de la contribution individuelle ($e_{ij}$) d'au moins un transducteur ultrasonore élémentaire (101) de la matrice, le procédé comprenant en outre une étape de calcul, au moyen d'un dispositif électronique de traitement, par des combinaisons linéaires des grandeurs électriques variables (VRi) lues sur les électrodes de ligne (Ri) du dispositif lors des N phases de réception (RX1, ...RXN), d'une contribution individuelle ($e_{ij}$) de chacun des transducteurs élémentaires (101) de la matrice.

2. Procédé selon la revendication 1, dans lequel le calcul des contributions individuelles ($e_{ij}$) des transducteurs élémentaires (101) de la matrice comprend une multiplication des grandeurs électriques variables (VRi) lues sur les électrodes de ligne (Ri) du dispositif lors des N phases de réception (RX1, ...RXN) par des coefficients d'une matrice [A], déterminés au préalable lors d'une phase de caractérisation ou de simulation et stockés dans une mémoire du dispositif électronique de traitement.

3. Procédé selon la revendication 1 ou 2, dans lequel, lors de chacune des N phases de réception (RX1, ...RXN), chaque électrode de colonne ($C_j$) de la matrice est maintenue à une tension de polarisation continue ($V_{bias}$, $-V_{bias}$), et dans lequel, entre deux phases de réception quelconques parmi les N phases de réception (RX1, ...RXN), on modifie le signe de la tension de polarisation continue ($V_{bias}$, $-V_{bias}$) appliquée sur au moins l'une des électrodes de colonne ($C_j$) du dispositif.

4. Procédé selon la revendication 3, dans lequel les signes des tensions de polarisation ($V_{bias}$, $-V_{bias}$) appliquées respectivement sur les électrodes de colonne ($C_j$) du dispositif lors des N phases de réception (RX1, ...RXN) sont codés par les vecteurs d'une matrice orthogonale, par exemple une matrice de Hadamard.

5. Procédé selon la revendication 3 ou 4, dans lequel les N tirs (TX1, ... TXN) successifs sont réalisés au moyen dudit dispositif d'imagerie ultrasonore matriciel à adressage ligne-colonne (100), et dans lequel, lors de chacun des N tirs (TX1, ... TXN), chaque électrode de colonne ($C_j$) de la matrice est maintenue à une tension de polarisation continue ($V_{bias}$, $-V_{bias}$), et une tension d'excitation alternative ($V_{exc}$) superposée à la tension de polarisation continue est appliquée sur ladite électrode de colonne ($C_j$), et dans lequel, lors de chaque tir, les signes des tensions de polarisation continues appliquées respectivement sur les électrodes de colonne ($C_j$) de la matrice sont les mêmes que les signes des tensions de polarisation continues appliquées respectivement sur les électrodes de colonne ($C_j$) lors de la phase de réception subséquente.

6. Procédé selon la revendication 1, dans lequel, entre deux phases de réception quelconques parmi les N phases de réception (RX1, ...RXN), on inverse, au moyen d'un système de commutateurs, la connexion électrique d'au moins un transducteur élémentaire (101) entre les électrodes de ligne ($R_i$) et de colonne ($C_j$), de façon à modifier le signe de la contribution individuelle ($e_{ij}$) dudit au moins un transducteur ultrasonore élémentaire (101) de la matrice.

7. Procédé selon l'une quelconque des revendications 1 à 6, dans lequel les transducteurs ultrasonores (101) sont des transducteurs CMUT ou PMUT.

8. Procédé selon l'une quelconque des revendications 1 à 7, dans lequel ladite matrice comprend N lignes et N colonnes de transducteurs ultrasonores élémentaires (101).

9. Procédé selon l'une quelconque des revendications 1 à 8, dans lequel la grandeur électrique variable ($V_{Ri}$) lue sur chaque électrode de ligne ($R_i$) du dispositif est une tension.

10. Dispositif d'imagerie ultrasonore matriciel à adressage ligne-colonne (100), le dispositif (100) comprenant une matrice de transducteurs ultrasonores élémentaires (101) connectés en lignes et en colonnes par respectivement des électrodes de ligne ($R_i$) et des électrodes de colonne ($C_j$), et un circuit de commande configuré pour mettre en oeuvre un procédé selon l'une quelconque des revendications 1 à 9.

11. Dispositif selon la revendication 10, dans lequel les transducteurs ultrasonores (101) sont des transducteurs CMUT ou PMUT.

**Patentansprüche**

1. Ein Verfahren zum Erfassen eines Bildes eines Körpers mittels einer Zeilen-Spalten-adressierten Matrix-Ultraschallbildgebungsvorrichtung (100), wobei die Vorrichtung (100) eine Anordnung von elementaren Ultraschallwandlern (101) aufweist, die in Zeilen und Spalten durch jeweilige Zeilenelektroden ($R_i$) und Spaltenelektroden ($C_j$) verbunden sind, wobei das Verfahren Folgendes aufweist:

   - Ausführen von N aufeinanderfolgenden Impulsen (TX1, ...TXN) derselben Ultraschallwelle in Richtung des Körpers, wobei N eine ganze Zahl größer oder gleich 2 ist,
   - nach jedem Impuls, Durchführen einer Empfangsphase (RX1, ...RXN), und zwar mittels der Vorrichtung, einer vom Körper reflektierten Ultraschallwelle, wobei, während jeder der Empfangsphasen (RX1, ...RXN), eine variable elektrische Größe, die die empfangene Welle repräsentiert, an jeder Zeilenelektrode ($R_i$) der Vorrichtung abgelesen wird,

   und wobei, zwischen zwei beliebigen der N Empfangsphasen (RX1, ...RXN), das Vorzeichen des individuellen Beitrags ($e_{ij}$) mindestens eines elementaren Ultraschallwandlers (101) der Anordnung geändert wird, wobei das Verfahren ferner einen Schritt aufweist, bei dem mittels einer elektronischen Verarbeitungsvorrichtung durch lineare Kombinationen der elektrischen variablen Größen ($V_{Ri}$), die während der N Empfangsphasen (RX1, ...RXN) an den Zeilenelektroden ($R_i$) der Vorrichtung gelesen werden, ein individueller Beitrag ($e_{ij}$) jedes der Elementarwandler (101) der Anordnung berechnet wird.

2. Das Verfahren nach Anspruch 1, wobei die Berechnung der individuellen Beiträge ($e_{ij}$) der Elementarwandler (101) der Anordnung eine Multiplikation der elektrischen variablen Größen ($V_{Ri}$) aufweist, die während der N Empfangsphasen (RX1, ...RXN) an den Zeilenelektroden ($R_i$) der Vorrichtung abgelesen werden, und zwar mittels Koeffizienten einer Matrix [A], die zuvor während einer Charakterisierungs- oder Simulationsphase bestimmt und in einem Speicher der elektronischen Verarbeitungsvorrichtung gespeichert wurden.

3. Das Verfahren nach Anspruch 1 oder 2, wobei, und zwar während jeder der N Empfangsphasen (RX1, ...RXN), jede Spaltenelektrode ($C_j$) der Anordnung auf einer Gleichstromvorspannung ($V_{bias}$, -$V_{bias}$) gehalten wird, und wobei, und zwar zwischen zwei beliebigen der N Empfangsphasen (RX1, ...RXN), das Vorzeichen der Gleichstromvorspannung ($V_{bias}$, -$V_{bias}$), die an mindestens eine der Spaltenelektroden ($C_j$) der Vorrichtung angelegt wird, geändert wird.

4. Das Verfahren nach Anspruch 3, wobei die Vorzeichen der Polarisationsspannungen ($V_{bias}$, -$V_{bias}$), die während der N Empfangsphasen (RX1, ...RXN) jeweils an die Spaltenelektroden ($C_j$) der Vorrichtung angelegt werden, durch die Vektoren einer orthogonalen Matrix, beispielsweise einer Hadamard-Matrix, codiert werden.

5. Das Verfahren nach Anspruch 3 oder 4, wobei die N aufeinanderfolgenden Impulse (TX1, ... TXN) mittels der Zeilen-Spalten-adressierten Matrix-Ultraschallbildgebungsvorrichtung (100) durchgeführt werden, und wobei, und zwar während jedes der N Impulse (TX1, ... TXN), jede Spaltenelektrode ($C_j$) der Anordnung auf einer Gleichstromvorspannung ($V_{bias}$, -$V_{bias}$) gehalten wird, und wobei eine der Gleichstromvorspannung überlagerte Wechselstrom-Erregungsspannung ($V_{exc}$) an die Spaltenelektrode ($C_j$) angelegt wird, und wobei, und zwar während jedes Impulses, die Vorzeichen der jeweils an die Spaltenelektroden ($C_j$) der Anordnung angelegten Gleichstromvorspannungen gleich sind wie die Vorzeichen der jeweils an die Spaltenelektroden ($C_j$) in der nachfolgenden Empfangsphase angelegten Gleichstromvorspannungen.

6. Das Verfahren nach Anspruch 1, wobei, und zwar zwischen zwei beliebigen der N Empfangsphasen (RX1, ...RXN), die elektrische Verbindung mindestens eines Elementarwandlers (101) zwischen den Zeilenelektroden ($R_i$) und den

Spaltenelektroden (C$_j$) mittels eines Schaltersystems umgekehrt wird, um das Vorzeichen des individuellen Beitrags (e$_{ij}$) des mindestens einen Elementarwandlers (101) der Anordnung zu ändern.

7. Das Verfahren nach einem der Ansprüche 1 bis 6, wobei die Ultraschallwandler (101) CMUT- oder PMUT-Wandler sind.

8. Das Verfahren nach einem der Ansprüche 1 bis 7, wobei die Anordnung N Reihen und N Spalten von elementaren Ultraschallwandlern (101) aufweist.

9. Das Verfahren nach einem der Ansprüche 1 bis 8, wobei die an jeder Zeilenelektrode (R$_i$) der Vorrichtung abgelesene elektrische variable Größe (V$_{Ri}$) ein Spannungswert ist.

10. Eine Zeilen-Spalten-adressierte Matrix-UltraschallBildgebungsvorrichtung (100), wobei die Vorrichtung (100) eine Anordnung von elementaren Ultraschallwandlern (101) aufweist, die in Zeilen und Spalten durch jeweilige Zeilen-elektroden (R$_i$) und Spaltenelektroden (C$_j$) verbunden sind, und eine Steuerschaltung, die so konfiguriert ist, dass sie ein Verfahren gemäß einem der Ansprüche 1 bis 9 ausführt.

11. Die Vorrichtung nach Anspruch 10, wobei die Ultraschallwandler (101) CMUT- oder PMUT-Wandler sind.

**Claims**

1. A method of acquiring an image of a body by means of a row-column addressed matrix ultrasonic imaging device (100), the device (100) comprising an array of elementary ultrasonic transducers (101) connected in rows and columns by respectively row electrodes (R$_i$) and column electrodes (C$_j$), the method comprising:

   - performing N successive shots (TX1, ...TXN) of the same ultrasonic wave towards said body, where N is an integer greater than or equal to 2;
   - after each shot, implementing a reception phase (RX1, ...RXN), by means of said device, of a return ultrasonic wave reflected by said body,

   in which, during each of the reception phases (RX1, ...RXN), a variable electrical quantity representative of the received wave is read at each row electrode (R$_i$) of the device,
   and in which, between any two of the N reception phases (RX1, ...RXN), the sign of the individual contribution (e$_{ij}$) of at least one elementary ultrasonic transducer (101) of the array is modified,
   the method further comprising a step of calculating, by means of an electronic processing device, by linear combinations of the electrical variable quantities (VRi) read on the row electrodes (Ri) of the device during the N reception phases (RX1, ...RXN), of an individual contribution (e$_{ij}$) of each of the elementary transducers (101) of the array.

2. The method of claim 1, wherein the calculation of the individual contributions (e$_{ij}$) of the elementary transducers (101) of the array comprises a multiplication of the electrical variable quantities (VRi) read on the row electrodes (Ri) of the device during the N reception phases (RX1, ...RXN) by coefficients of a matrix [A], previously determined during a characterization or simulation phase and stored in a memory of the electronic processing device.

3. The method of claim 1 or 2, wherein, during each of the N receiving phases (RX1, ...RXN), each column electrode (C$_j$) of the array is maintained at a DC bias voltage (V$_{bias}$, - V$_{bias}$),
   and wherein, between any two of the N receiving phases (RX1, ...RXN), the sign of the DC bias voltage (V$_{bias}$, - V$_{bias}$) applied to at least one of the device's column electrodes (C$_j$ ) is changed.

4. The method of claim 3, wherein the signs of the polarization voltages (V$_{bias}$, -V$_{bias}$) applied respectively to the column electrodes (C$_j$) of the device during the N reception phases (RX1, ...RXN) are coded by the vectors of an orthogonal matrix, for example a Hadamard matrix.

5. The method of claim 3 or 4, wherein the N successive shots (TX1, ... TXN) are performed by means of said row-column-addressed matrix ultrasonic imaging device (100), and wherein, during each of the N shots (TX1, ... TXN), each column electrode (C$_j$) of the array is held at a DC bias voltage (V$_{bias}$, -V$_{bias}$), and an AC excitation voltage (V$_{exc}$) superimposed on the DC bias voltage is applied to said column electrode (C$_j$), and wherein, during each shot, the signs of the DC bias voltages applied respectively to the column electrodes ($C_j$) of the array are the same as the signs of the DC bias voltages applied respectively to the column electrodes ($C_j$) in the subsequent receiving phase.

6. The method of claim 1, wherein, between any two of the N receiving phases (RX1, ...RXN), the electrical connection of at least one elementary transducer (101) between the row ($R_i$) and column ($C_j$) electrodes is reversed by means of a system of switches, so as to modify the sign of the individual contribution ($e_{ij}$) of said at least one elementary ultrasonic transducer (101) of the array.

7. The method of any one of claims 1 to 6, wherein the ultrasonic transducers (101) are CMUT or PMUT transducers.

8. The method of any one of claims 1 to 7, wherein said array comprises N rows and N columns of elementary ultrasonic transducers (101).

9. The method of any one of claims 1 to 8, wherein the electrical variable quantity ($V_{Ri}$) read on each row electrode ($R_i$) of the device is a voltage value.

10. A row-column addressed matrix ultrasonic imaging device (100), the device (100) comprising a array of elementary ultrasonic transducers (101) connected in rows and columns by respective row electrodes ($R_i$) and column electrodes ($C_j$), and a control circuit configured to implement a method according to any one of claims 1 to 9.

11. The device of claim 10, wherein the ultrasonic transducers (101) are CMUT or PMUT transducers.

Fig. 1

Fig. 2

# Fig. 3

# Fig. 4

# Fig. 5

(a)

(a')

(b)

(c)

# Fig. 6

(a)

(b)

$V_{nec}$

$V_{cMUT>0}$      $V_{bias>0}$

(c)

$V_{nec}$

$V_{cMUT<0}$      $V_{bias<0}$

(c')

# Fig. 7

Fig. 8

# Fig. 9

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2106871
- US 2019235077 A
- FR 1906515

**Littérature non-brevet citée dans la description**

- **C. CEROICI et al.** Fast Orthogonal Row-Column Electronic Scanning With Top-Orthogonal-to-Bottom Electrode Arrays. *IEEE Transactions On Ultrasonics Ferroelectrics and Frequency Control*, 01 June 2017, vol. 64 (6), 1009-1014
- **C. CEROICI et al.** Fast Orthogonal Row-Column Electronic Scanning With Top-Orthogonal-to-Bottom Electrode Arrays. *IEEE Transactions On Ultrasonics Ferroelectrics and Frequency Control*, 01 June 2019, vol. 66 (6), 1093-1101